# EUROPEAN PATENT APPLICATION

(11) **EP 3 734 351 A1**
(43) Date of publication of application: **04.11.2020**
(21) Application number: 18903871.4
(22) Date of filing: 31.01.2018
(51) Int. Cl.: G02B 27/02

(54) **IMAGE DISPLAY DEVICE**

(71) Applicant: Shimadzu Corporation, Kyoto 604-8511 (JP)
(72) Inventor: TANAKA, Masato, Kyoto-shi, Kyoto 604-8511 (JP)
(74) Representative: Müller-Boré & Partner Patentanwälte PartG mbB
(86) International application number: PCT/JP2018/003084
(87) International publication number: WO 2019/150461

(57) **Abstract**

Image light is introduced into a light guide through a collimating optical system, reflected by an incident side reflective surface (101) in a substrate (100), and repeatedly reflected between a first surface and a second surface (100a, 100b). The image light reaches a plurality of emission side reflective surfaces (102a to 102c) that constitute a beam splitter. The incident side reflective surface (101) and the emission side reflective surfaces (102a to 102c) are arranged in parallel. Therefore, with respect to the image light (LI, L2) derived from the image light emitted from the same position on a display surface of a display unit and incident on the substrate 100 at the same incident angle θ1, the emission angle θ2 of the image light (L1', L2') emitted from the substrate (100) becomes equal in both cases when the light is reflected one time by the incident side reflective surface (101) and one time by the emission side reflective surface (102a) and when the light is reflected two times by the incident side reflective surface (101) and two times by the emission side reflective surface (102a). As a result, it is possible to reduce the generation of a ghost image, which in turn can improve the visibility of a virtual image.

## Description

### Technical Field

The present invention relates to an image display device that displays image information as a virtual image in front of eyes of a user, and more particularly to an image display device using a light guide for enlarging a light flux (exit pupil). The image display device according to the present invention is suitable for an image display device, such as, e.g., a helmet-mounted display, a head-up display, and a spectacle-type display (so-called "smart glasses").

### Background of the Invention

In automobiles and trains, a head-up display is used in which an image displayed on a display element, such as a liquid crystal display (LCD), is projected onto a windshield or a combiner to reflect it back to the driver to form a display image by a virtual image in front of the eyes of the driver. Further, in airplanes, a helmet-mounted display is used in which an image is projected onto a combiner provided on a helmet worn by a pilot on the head to form a display image by a virtual image in front of the eyes of the pilot by the similar mechanism. Recently, a spectacle type or head-mounted type head-mounted display called a smart glass or the like has also begun to become widespread.

Various types of image display devices are known as optical systems that display a virtual image in front of the eyes of an observer. One of them is a device using a light guide (light guide plate).

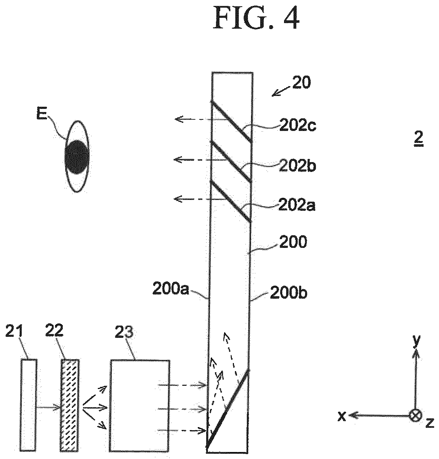

FIG. 4 is a schematic diagram showing an optical path configuration according to an example of a conventional image display device using a light guide disclosed in Patent Documents 1 and 2, etc. For the convenience of description, the x-axis, y-axis, and z-axis orthogonal to each other are defined as shown in the drawing.

The image display device 2 is provided with a light source 21, a display element 22, a collimating optical system 23, and a light guide 20. Here, the display element 22 is a transmissive liquid crystal display element, and the light source 21 is a backlight source for a so-called transmissive liquid crystal display element. The light emitted from the light source 21 illuminates the display element 22 from the rear side, so that the light including an image formed on the display surface of the display element 22 as information (hereinafter referred to as "image light") is emitted from the display element 22. The collimating optical system 23 introduces the image light emitted from the respective points (pixels) of the display surface of the display element 22 as substantially parallel light fluxes to the light guide 20. Accordingly, the light introduced from the collimating optical system 23 to the light guide 20 is a set of parallel light fluxes that contain information on different portions of the image formed on the display surface of the display element 22 and are incident on the light guide 20 at different angles.

The light guide 20 is provided with a transparent substrate 200 in the form of a flat cube. The substrate 200 has a first surface 200a and a second surface 200b which are in parallel to the y-z plane and are facing with each other, and a third surface and a fourth surface (not shown) which are parallel to the x-y plane. A single incident side reflective surface 201 and a plurality (three in this case) of emission side reflective surfaces 202a to 202c are formed inside the substrate 200. The incident side reflective surface 201 is perpendicular to the third surface and the fourth surface and is inclined with respect to the first surface 200a and the second surface 200b. The plurality of emission side reflective surfaces 202a to 202c are also perpendicular to the third surface and the fourth surface, are inclined with respect to the first surface 200a and the second surface 200b, and are parallel to each other. Here, the incident side reflective surface 201 is a reflective surface, such as a mirror, and the emission side reflective surfaces 202a to 202c each are a partially reflective surface having a predetermined reflectance (i.e., transmittance), i.e., a beam splitter or a half-mirror.

As described above, the image light including the information on the different portions of the image formed on the display surface of the display element 22 enters the light guide 20 at different angles as parallel light fluxes and is reflected by the incident side reflective surface 201. The light fluxes are repeatedly reflected by the first surface 200a and the second surface 200b and are transmitted through the inside of the substrate 200 to reach the emission side reflective surface 202a. The emission side reflective surface 202a reflects a part of the arrived image light and transmits the remainder. The transmitted image light reaches the subsequent emission side reflective surface 202b, and the part of which is reflected by the emission side reflective surface and the rest of which is transmitted therethrough. The same applies to the emission side reflective surface 202c. Therefore, a part of the image light transmitted through the inside of the substrate 200 of the light guide 20 is reflected by the plurality of emission side reflective surfaces 202a to 202c, respectively, and is transmitted through the first surface 200a of the substrate 200 to be emitted to the outside. The image light reflected by each emission side reflective surface 202a to 202c is incident on the eyes E of the observer at predetermined angles.

In this way, in the image display device 2, the image formed on the display surface of the display element 22 is displayed in front of the eyes of the observer as a virtual image. Also, since the substrate 200 of the light guide 20 is transparent and the emission side reflective surfaces 202a to 202c are partially reflective surfaces, so the viewer can view the forward scene through the light guide 20.

In the see-through type image display device 2, any image information can be superimposed on the scene as a virtual image and displayed, but a ghost image caused by stray light or the like generated in the process that the image light passes through substrate 200 of the light guide 20 is formed, which may sometimes result in deteriorated visibility of the virtual image superimposed on the scene. In particular, when the number of emission side reflective surfaces is increased, the number of surfaces on which image light is reflected increases, so that the cause of a ghost image in a virtual image increases.

### Prior Art Document

### Patent Document

Patent Document 1: Japanese Patent No. 4508655
Patent Document 2: Japanese Patent No. 5698297

### SUMMARY OF THE INVENTION

### Problems to be Solved by the Invention

The present invention has been made in order to solve the above-described problems, and the main object thereof is to improve the visibility of a virtual image by reducing a ghost image in an image display device using a light guide.

### Means for Solving the Problem

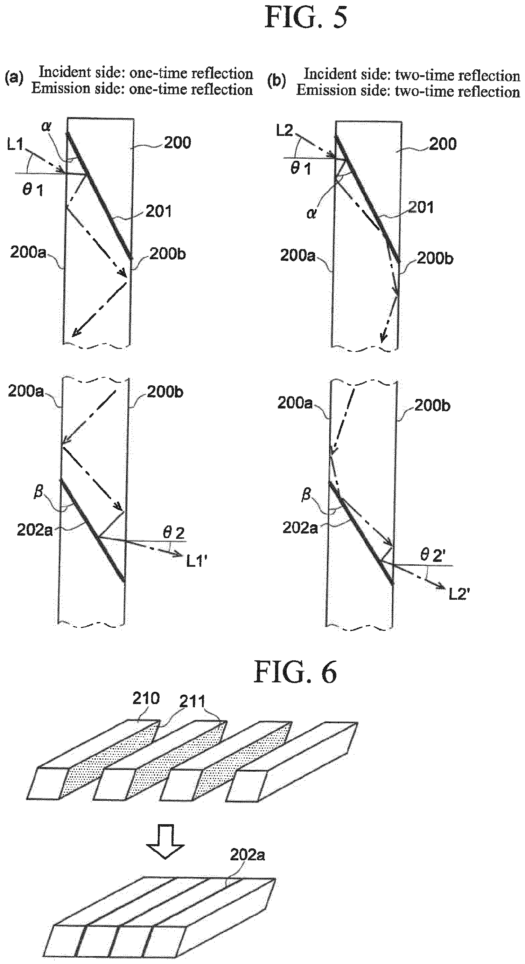

Although there are various factors in ghosting that occurs in an image display device using a light guide, the present inventor focused on ghosting caused by the difference in the number of reflections between an incident side reflective surface and an emission side reflective surface in the process of examining an optical path configuration of a light flux introduced into the light guide. FIG. 5 shows an optical path for particular image light for explaining the factor for ghosting.

As described above, since the image light emitted in different directions from a predetermined position on the display surface of the display element is collimated by a collimating optical system, the image light enters the first surface 200a of the substrate 200 of the light guide 20 at a constant incident angle θ1 as shown in FIG. 5(a) and (b). FIG. 5(a) shows an optical path in which the incident image light L1 is reflected only once by the incident side reflective surface 201, reflected once by the emission side reflective surface 202a, and emitted through the second surface 200b. On the other hand, FIG. 5(b) shows an optical path in which the incident image light L2 is reflected twice by the incident side reflective surface 201, is also reflected twice by the emission side reflective surface 202a, and is emitted through the second surface 200b.

In the case of FIG. 5(a), the image light L1' exits from the first surface 200b of the substrate 20 at a predetermined emission angle θ2. On the other hand, in the case of FIG. 5(b), the image light L2' exits from the first surface 200b of the substrate 20 at the emission angle θ2' which is different from the emission angle θ2. That is, even if the incident angle of the image light entering the light guide 20 is the same, the emission angle of the image light exiting the light guide 20 differs, i.e., the image light becomes non-parallel light, depending on the number of reflections at incident side reflective surface 201 and the emission side reflective surface 202a. If the image light emitted from the light guide 20 is not parallel as described above, despite that the image information contained in the image light is the same (because they originate from the light emitted from the same position on the display plane of the display element), they are displayed at different positions when viewed from the observer. That is, provided that one of the images is a normal image, the other image becomes a ghost image.

As described above, the reason that the image light emitted from the light guide 20 becomes non-parallel light depending on the number of reflections at the incident side reflective surface 201 and the emission side reflective surface 202a is that the incident side reflective surface 201 and the emission side reflective surface 202a are not parallel to each other. That is, in a conventional image display device, the generation of a ghost image due to the difference in the number of reflections at the incident side reflective surface 201 and the emission side reflective surface 202a is not considered at all. Therefore, it is presumed that a ghost image increases, which decreases the visibility of the virtual image. The present inventor made the present invention based on these findings.

That is, the present invention made in order to solve the above-described problems is directed to an image display device for displaying a virtual image, including:
a) an image emission unit configured to generate parallel light fluxes that include two-dimensional image information and differ in an angle at each portion of an image and to make the light fluxes incident on a light guide; and
b) the light guide,
wherein the light guide includes:
a transparent substrate having a first surface and a second surface facing each other in parallel;
an incident side reflective surface formed inside the substrate so as to be inclined with respect to the first surface and the second surface, the incident side reflective surface being configured to guide image light incident into the substrate through the first surface or the second surface from the image emission unit to an inside of the substrate so as to be reflected by the first surface and the second surface; and
one or a plurality of partially reflective surfaces formed in the substrate so as to be inclined with respect to the first surface and the second surface, the one or a plurality of partially reflective surfaces being configured to reflect a part of the image light guided to the inside of the substrate by the incident side reflective surface and transmitted through the inside of the substrate while being reflected by the first surface and the second surface to emit the part of the image light to an outside of the substrate,
wherein the incident side reflective surface and the one or a plurality of partially reflective surfaces are formed so as to be inclined at a same predetermined angle with respect to the first surface or the second surface.

In the image display device according to the present invention, when the front of the light guide (the side beyond the light guide when the light guide is viewed from the observer) is shielded, only the virtual image in which the front scenery is not superimposed can be displayed in front of the eyes of the observer. On the other hand, the front of the light guide is not shielded, the virtual image can be superimposed on the front scene and displayed.

As described above, in a conventional image display device, the incident side reflective surface for guiding the image light to the inside of the substrate and the partially reflective surface for emitting (that is, making the image light reach the eyes of the observer) a part of the image light to the outside of the substrate are arranged in a non-parallel manner. On the other hand, in the present invention, the incident side reflective surface and the partially reflective surface are arranged in parallel. With this, for the image light incident on the first surface or the second surface at a certain angle, the emission angle of a part of the image light reflected only once by the incident side reflective surface, reflected only once by the partially reflective surface, and emitted to the outside of the substrate and the emission angle of a part of the image light reflected twice by the incident reflective surface, reflected twice by the partially reflective surface, and emitted to the outside of the substrate become equal. That is, when the image light emitted from the same portion of the image on the image emission unit in different directions and introduced into the light guide as a light flux substantially parallel to each other is emitted from the light guide, they are emitted substantially parallel to each other. As a result, the generation of a ghost image can be reduced.

Parallelizing the incident side reflective surface and the partially reflective surface also has the following benefits:
When forming a plurality of partially reflective surfaces in the substrate, there is a method described in FIG. 32, FIG. 35, and the like of Patent Document 2. That is, as shown in FIG. 6, a film layer 211 constituting a partially reflective surface is formed on the surface of each of a plurality of transparent plates 210 having the same thickness, and the plates 210 are stacked and bonded to obtain a substrate in which mutually parallel partially reflective surfaces are formed. However, when the incident side reflective surface and the partially reflective surface are non-parallel as in a conventional image display device, it is necessary to use, for example, a plate having a non-uniform thickness in order to form the incident side reflective surface, the manufacturing is time-consuming and costly.

In contrast, according to the present invention, when manufacturing a light guide by the above-described method, it is possible to use a plate having a uniform thickness to form the incident side reflective surface, and further, by changing the number of laminated plates that do not form a film layer on the surface with the exact same thickness, it is also possible to adjust the interval between the incident side reflective surface and the partially reflective surface. In this way, the present invention can improve the manufacturability of a light guide and reduce its manufacturing costs.

In the image display device according to the present invention, one partially reflective surface may be used, but preferably, a plurality of the partially reflective surfaces is provided, and the plurality of partially reflective surfaces is arranged so that the image light transmitted through one partially reflective surface reaches a subsequent partially reflective surface.

Further, in the image display device according to the present invention, it may be configured such that the image light is emitted by the partially reflective surface from a side opposite to a side on which the image emission unit is arranged across the light guide.

Generally, in an image display device used for a spectacle display, it is advantageously configured to emit the image light from the same side of the light guide where the image emission unit is located. This is because a space for arranging the image emission unit can be secured on the viewer's face side, while it is not required to arrange the image emission unit so as to protrude in front of the spectacle-type display. In contrast, in an image display device used for a helmet-mounted display, it is preferable to arrange the image emission unit at a side opposite to the observer's eye across the light guide to avoid the physical interference between the image emission unit and the helmet. Since the above-described configuration is suitable for such an arrangement, the image display device of the above-described configuration in the present invention can be said to be particularly useful for a helmet-mounted display.

### Effects of the Invention

According to the image display device of the present invention, ghosting can be reduced as compared with a conventional device, which can improve the visibility of a virtual image. Further, since the incident side reflective surface and the partially reflective surface of the light guide are parallel, the light guide can be easily manufactured, resulting in a reduced equipment cost.

### BRIEF DESCRIPTION OF THE DRAWINGS

FIG. 1 is a schematic configuration diagram of an optical system in an image display device, which is an embodiment of the present invention.
FIG. 2 is a plan view of a light guide in the image display device of this embodiment when viewed in the y-axis direction.
FIG. 3 is a diagram illustrating an optical path for a particular image light in the image display device of this embodiment.
Fig. 4 is a schematic configuration diagram of an optical system in an example of a conventional image display device.
FIG. 5 is a diagram illustrating an optical path for a particular image light in a conventional image display device.
FIG. 6 is an explanatory view of a manufacturing process for forming an emission side reflective surface (partially reflective surface) of a light guide.

### EMBODIMENTS FOR CARRYING OUT THE INVENTION

An image display device, which is an embodimeent of the present invention, will be described by referring to the attached drawings.

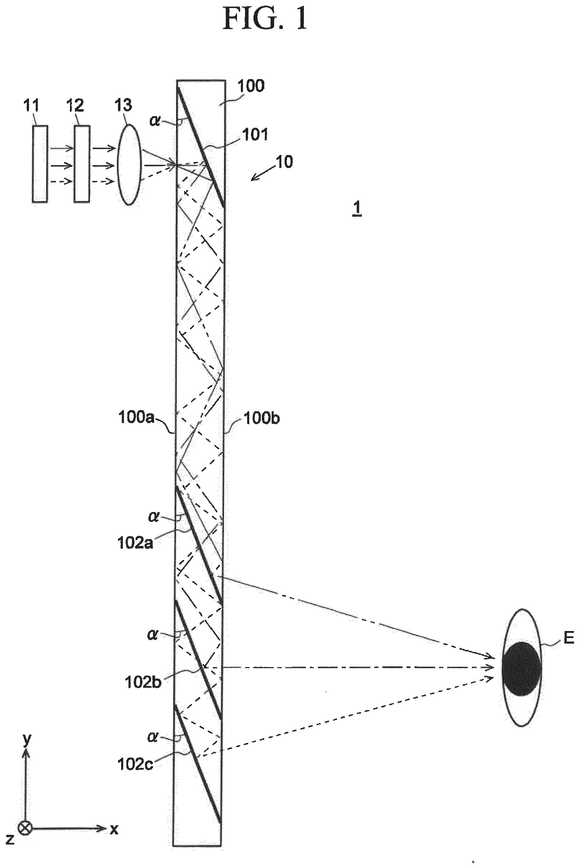

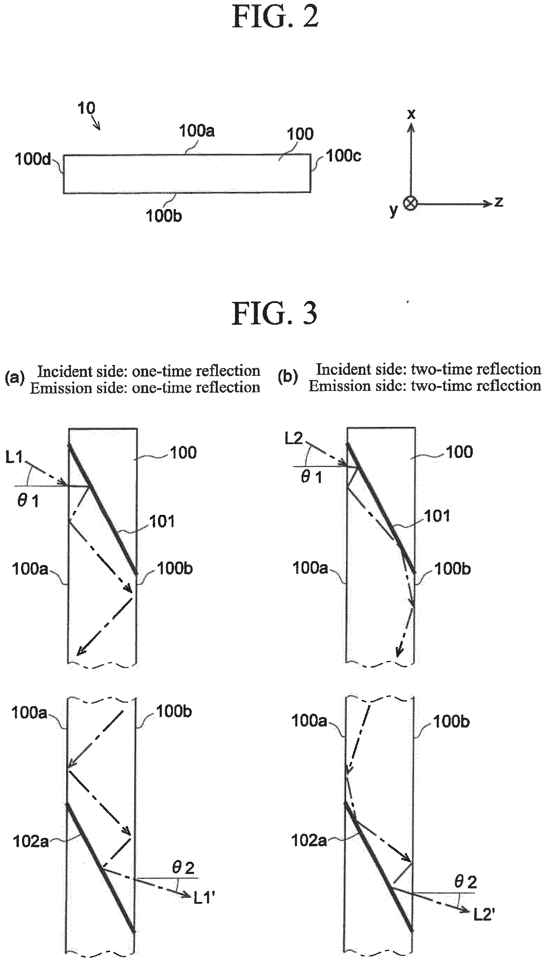

FIG. 1 is a schematic configuration diagram of an optical system in the image display device of this embodiment, and FIG. 2 is a plan view of a light guide when viewed in the y-axis direction.

The image display device 1 of this embodiment is provided with a light source 11, a display element 12, a collimating optical system 13, and a light guide 10, similar to the conventional image display device 2 shown in FIG. 4. The light source 11, the display element 12, and the collimating optical system 13 correspond to the image emission unit in the present invention, and these can be the same as the light source 21, the display element 22, the collimating optical system 23 in the conventional image display device 2, but not limited thereto. For example, as the display element 12, instead of a transmissive liquid crystal display element, a reflective liquid crystal display element or an organic EL display, or a DMD (digital macro mirror device), a MEMS mirror, a projector, or the like, may be used.

When a reflective liquid crystal display element or a DMD is used as the display element 12, the light source 11 is used to illuminate the liquid crystal display element or the DMD from the front side. Further, in the case of using a self-emitting display element such as an organic EL display as the display element 12, it can be considered that the light source 11 is incorporated in the display element 12. Further, in cases where a MEMS mirror for scanning an angle is used as the display element 12, a laser light source for emitting a thin laser beam toward the MEMS mirror is used as the light source 11, the collimating optical system 13 is omitted, or it is sufficient to use the collimating optical system 13 to fine-tune the parallel light. Further, in cases where a projector is used as an image forming unit, the light source 11 can be regarded as a projector, and the display element 12 can be regarded as a projector screen.

The light guide 10 is provided with a flat cube-shaped substrate 100 having a first surface 100a and a second surface 100b, both parallel to the y-z plane and facing with each other, and a third surface 100c and a fourth surface 100d, both parallel to the x-y plane and facing with each other. The substrate 100 is a transparent body made of, polycarbonate resin or quartz glass. A single incident side reflective surface 101 and a plurality of (three in this embodiment) emission side reflective surfaces 102a to 102c are formed inside the substrate 100.

The incident side reflective surface 101 is perpendicular to the third surface 100c and the fourth surface 100d and inclined at an angle α with respect to the first surface 100a. Also, the plurality of emission side reflective surfaces 102a to 102c are similarly perpendicular to the third surface 100c and the fourth surface 100d, respectively, and inclined at an angle α with respect to the first surface 100a. The incident side reflective surface 101 is a reflective surface such as a mirror, and the emission side reflective surfaces 102a to 102c each are a partially reflective surface having a predetermined reflectance. As described above, since the incident side reflective surface 101 and the plurality of emission side reflective surfaces 102a to 102c are both inclined at an angle α with respect to the first surface 100a, the incident side reflective surface 101 and the plurality of emission side reflective surfaces 102a to 102c are parallel to each other.

In the image display device 1 of this embodiment, the image light emitted from the display screen of the display element 12 upon receiving the illumination light from the light source 11 is substantially collimated by the collimating optical system 13, passes through the first surface 100a, and is introduced into the substrate 100 of the light guide 10. The image light introduced from the collimating optical system 13 to the light guide 10 is a set of parallel light fluxes that contain information of different parts of two-dimensional images, each formed on the display surface of display element 12, and incident on the light guide 10 at different angles.

After being reflected by the incident side reflective surface 101, the image light is reflected one or more times by the first surface 100a and the second surface 100b, and is transmitted through the inside of the substrate 100, and reaches the emission side reflective surface 102a located closest to the incident side reflective surface 101. The emission side reflective surface 102a reflects a part of the arrived light flux and transmits the remainder. The transmitted light reaches the subsequent emission side reflective surface 102b, a part of its light flux is reflected and the rest is transmitted. The same applies to the emission side reflective surface 102c. Therefore, the light flux transmitted through the substrate 100 of the light guide 10 is reflected by the plurality of the emission side reflective surfaces 102a to 102c, respectively, and is transmitted through the second surface 100b of the substrate 100 to be emitted to the outside. As a result, the light flux introduced into the substrate 100 of the light guide 10 is enlarged and emitted from the substrate 100, and an image formed on the display surface of display element 12 is displayed as a virtual image in front of the eyes E of the observer.

In the image display device 1, since the incident side reflective surface 101 and the plurality of emission side reflective surfaces 102a to 102c of the light guide 10 are parallel to each other, a ghost image generated in a conventional device can be avoided. FIG. 3 is a diagram showing an optical path for a particular image light in the image display device 1 of this embodiment, which corresponds to FIG. 5 in a conventional device.

Since the image light emitted from a predetermined position on the display surface of the display element 12 in different directions is collimated by the collimating optical system 13, the collimated light is incident on the first surface 100a at a constant incident angle θ1 as shown in FIG. 3(a) and (b). FIG 3 (a) is an optical path in the case of reflecting the image light only once at the incident side reflective surface 101 and reflecting the image light once at the emission side reflective surface 102a to emit the image light through the second surface 100b. FIG 3(b) is a light path in the case of reflecting the light image twice at the incident side reflective surface 101 and also reflecting the image light twice at the emission side reflective surface 102a to emit the image light through the second surface 100b. Since the incident side reflective surface 101 and the emission side reflective surface 102a are parallel, the emission angle θ2 of the image light to be emitted becomes equal.

That is, in this image display device 1, in cases where the number of reflections at the incident side reflective surface 101 and that at the emission side reflective surfaces 102a to 102c are the same, the image light incident on the light guide 10 in parallel is emitted in parallel from the light guide 10. The image information contained in the image light emitted from the light guide 10 is displayed at the same position as viewed by the observer. Therefore, the virtual image formed by such image light will not become a ghost image but become a normal virtual image. As described above, according to a conventional device, since the image light under the condition causing a ghost image does not form a ghost image, it is possible to improve the visibility of the virtual image displayed in front of the eyes of the observer.

When the incident side reflective surface 101 and the emission side reflective surfaces 102a to 102c are parallel, the thickness of the substrate 100 between the incident side reflective surface 101 and the emission side reflective surface 102a in the y-axis direction becomes even. Therefore, when manufacturing a light guide by the method described in Patent Document 2 or the like as described above, it is unnecessary to use a transparent plate having a non-uniform thickness (thickness gradually increases), and it is only necessary to use a transparent plate having a uniform thickness, which can suppress the manufacturing costs.

Note that in the image display device of the above-described embodiment, the number of the emission side reflective surface is three, but the number can be arbitrarily determined as long as long as it is 1 or more.

In the device of the above-described embodiment, the third surface 100c and the fourth surface 100d of the substrate 100 are parallel with each other, but the third surface 100c and the fourth surface 100d need not be parallel to the x-y plane. That is, the first surface 100a, the second surface 100b, the incident side reflective surface 101, and the emission side reflective surface 102a to 102c, the third surface 100c, and the fourth surface 100d need not be perpendicular, and the angles therebetween and the shapes of the surfaces of the third surface 100c and the fourth surface 100d can be arbitrarily determined.

It should be also noted that the above-mentioned embodiments are merely examples of the present invention, and it is needless to say that it is encompassed within the scope of the claims of the present application even if it is appropriately changed, modified or added within the scope of the present invention.

### Description of Symbols

- 1:: Image display device
- 10:: Light guide
- 100:: Substrate
- 100a:: First surface
- 100b:: Second surface
- 100c:: Third surface
- 100d:: Fourth surface
- 101:: Incident side reflective surface
- 102a∼102c:: Emission side reflective surface
- 11:: Light source
- 12:: Display element
- 13:: Collimating optical system

## Claims

1. An image display device for displaying a virtual image, comprising:
a) an image emission unit configured to generate parallel light fluxes that include two-dimensional image information and differ in an angle at each portion of an image and to make the light fluxes incident on a light guide; and
b) the light guide,
wherein the light guide includes:
a transparent substrate having a first surface and a second surface facing each other in parallel;
an incident side reflective surface formed inside the substrate so as to be inclined with respect to the first surface and the second surface, the incident side reflective surface being configured to guide image light incident into the substrate through the first surface or the second surface from the image emission unit to an inside of the substrate so as to be reflected by the first surface and the second surface; and
one or a plurality of partially reflective surfaces formed in the substrate so as to be inclined with respect to the first surface and the second surface, the one or a plurality of partially reflective surfaces being configured to reflect a part of the image light guided to the inside of the substrate by the incident side reflective surface and transmitted through the inside of the substrate while being reflected by the first surface and the second surface to emit the part of the image light to an outside of the substrate,
wherein the incident side reflective surface and the one or a plurality of partially reflective surfaces are formed so as to be inclined at a same predetermined angle with respect to the first surface or the second surface.

2. The image display device as recited in claim 1,
wherein a plurality of the partially reflective surfaces is provided, and the plurality of partially reflective surfaces is arranged so that the image light transmitted through one partially reflective surface reaches a subsequent partially reflective surface.

3. The image display device as recited in claim 1 or 2,
wherein the image light is emitted by the partially reflective surface from a side opposite to a side on which the image emission unit is arranged across the light guide.
